# EUROPEAN PATENT APPLICATION

(11) **EP 3 530 406 A1**
(43) Date of publication of application: **28.08.2019**
(21) Application number: 19159231.0
(22) Date of filing: 25.02.2019
(51) Int. Cl.: B24B 27/00, B25J 11/00, B24B 41/047, B24B 41/02, B24B 7/18

(54) **SURFACE TREATMENT APPARATUS AND METHOD WITH SELECTIVE LOADING**

(30) Priority: 23.02.2018 US 201862634394 P; 22.02.2019 US 201916283096
(71) Applicant: Temple Allen Holdings LLC, Rockville, MD 20850 (US)
(72) Inventor: Bittorf, James, Rockville, Maryland 20853 (US); Brewer, Shane, Washington, DC 20015 (US); Wentz, John, Rockville, Maryland 20850 (US)
(74) Representative: Crouch, David John

(57) **Abstract**

Apparatus for treating the surface of an article comprising a motor (8) and a backup pad (12) attached to the motor (8) and driven by the motor (8), in which the apparatus further comprises means (26, 28, 44) for applying a non-uniform contact pressure to the backup pad (12).

## Description

### TECHNICAL FIELD

This invention relates to the art of machines used for surface treatment, such as sanding and polishing machines.

### BACKGROUND ART

Known machines for treating larger surfaces such as floors and exterior surfaces of aircraft and ships typically provide a movable element, commonly referred to as a backup pad, to which an abrasive pad is attached. The movable element is driven by a source of power that moves the element and abrasive pad in a rotational and/or orbital motion. These machines typically present the movable element such that it can be moved across the surface to be treated and apply a contact pressure through the pad to the surface that is uniformly distributed across the pad.

It is often desirable, however, to apply a greater pressure to the pad, for example, to remove a coating from the surface more quickly. One example of this is where one or more coatings of paint are to be removed from the surface. It is often impractical to simply increase the force applied to the pad because the area of the pad may require application of a force to the pad that is too great for the structure of the overall machine or may stall the power source.

While it is known to apply greater pressure to a particular portion of an abrasive pad when the surface is being treated manually, as by pressing harder on a part of the pad or by tilting an element holding the pad, such an operation tends to apply uneven and erratic pressures that result in uneven removal of the surface coating.

### SUMMARY OF THE INVENTION

In accordance with the invention apparatus is provided that can be attached to a surface-treatment machine to apply a force that creates a non-uniform contact pressure between the pad and the surface being abraded. This increases the localized pressure in a given area to achieve a greater rate of abrasion. Because the force can be controlled and is consistent, the surface is treated uniformly. In certain cases (e.g., treatment of an uneven surface), the force may be actively (but inconsistently) controlled to produce a uniform surface treatment.

The invention allows paint to be removed from the surface faster than treating without the increased pressure applied by use of the invention.

In preferred embodiments, the backup pad, to which the abrasive pad is attached is driven rotationally about a motor axis by a pneumatic motor. The motor is mounted to one end of an end effector frame that allows the motor to pitch about a bearing axis. The frame itself is mounted for rotation about an axis transverse to the bearing axis to permit angular adjustment of the orientation of the backup pad and abrasive to match that of the surface being treated. An opposite end of the end effector frame is mounted to a module that controls the motion of the end effector frame to direct it in a selected pattern across the surface to be treated. The module can include an arm whose position is controlled, for example, by cables that are in turn controlled by a plurality of pneumatic cylinders. The module can be that manufactured by Temple Allen Industries under the trademark EMMA or other systems, such as those used in the art of robotics, or systems that control movement over a surface to be treated.

In disclosed embodiments, a torque is applied to the end effector frame to provide a uniform increase in the pressure applied to selected areas of the backup pad. Embodiments disclosed include apparatus having a single backup pad and apparatus having two backup pads.

### BRIEF DESCRIPTION OF THE INVENTION

Figure 1a is a perspective of a first embodiment of the invention.
Figure 1b is an assembly view of the embodiment of figure 1a showing the end effector frame detached from the module.
Figures 2a-2d showing different positions of attachment of the end effector frame to the module.
Figure 3 shows a second embodiment of the invention, where a torque can be applied to the end effector frame to apply a greater force to one side of the end effector.
Figures 4a and 4b illustrate additional features of the embodiment of figure 3.
Figures 5a to 5c illustrate the effects of application of torque to the end effector frame.
Figure 6 illustrates another embodiment of the invention.
Figures 7a-7c illustrate the effects of application of torque to the end effector frame in the embodiment of figure 6.
Figures 8a and 8b show an embodiment of the invention using two end effectors, where each end effector is connected to a rotary actuator.
Figures 9a and 9b show an embodiment using two end effectors, where each end effector and a dual adaptor plate are connected to a rotary actuator.
Figure 10 shows an embodiment where two end effectors, each of which is attached to a rotary actuator are attached to a vibration-absorbing connector.
Figure 11 illustrates an end effector having a rotary actuator and a quick-connect for connecting the end effector to an extension.
Figure 12 is a perspective view of another embodiment of the invention.

### DETAILED DESCRIPTION OF THE INVENTION

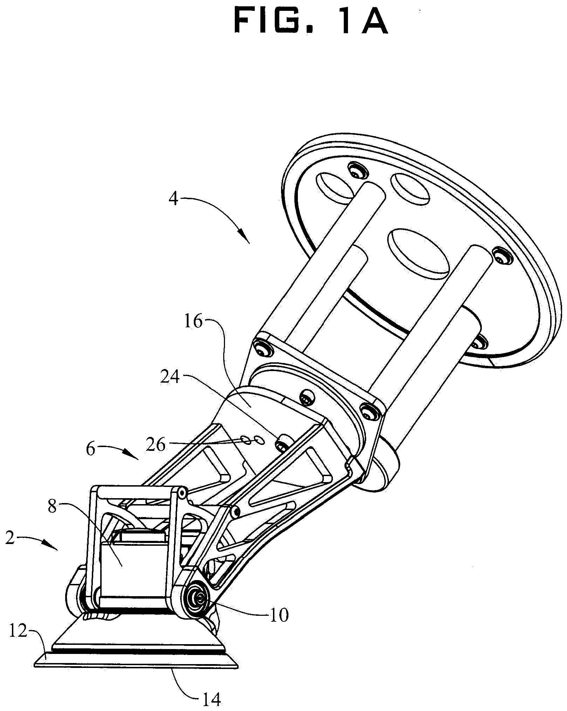

With reference to figure 1a, an end effector 2 is attached to an extension 4 by an end effector frame 6. Extension 4 can be attached to an arm of a module. The end effector 2 includes a motor 8 that is mounted to the end effector frame 6 by bearing 10. A backup pad 12 is attached to the motor 8 and receives a surface treatment pad 14, typically an abrasive disk. Bearings 10 and 20 allow the backup pad 12 to pivot about respective axes to conform the orientation of the surface treatment pad 14 to the orientation of the surface being treated.

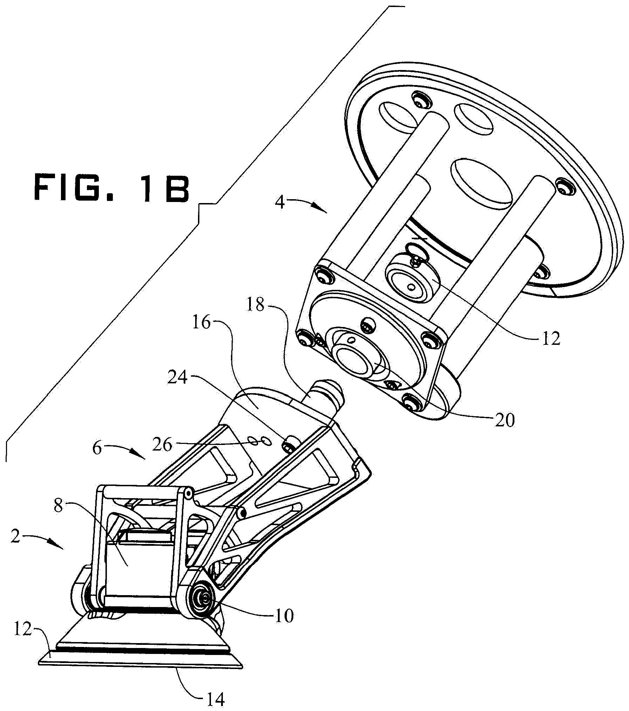

With reference to figure 1b, the end effector frame 6 includes a back plate 16 that is attached to the extension 4 by a post 18 that is received in the bearing 20 and retained in position by a collar 22. The post 18 is attached to the back plate 16 by a socket cap screw 24 that passes through a selected hole 26 in the back plate and into a threaded hole (not shown) in the post 18.

In the usual operation of the surface treatment machine, the end effector frame 6 is attached to the extension 4 by securing the post 18 to the back plate 16 at a central location of the back plate. This ensures that the force applied to the end effector frame by the extension is evenly distributed across the backup pad in the direction of the bearing 10. In the embodiment of figure 1, however additional holes 26 are provided, which are displaced from a central location in a direction parallel to bearing 10. This off-center position displaces the application of force by the extension 4 to one side of the back plate and, hence, to one side of the surface treatment pad 14. Biasing the force on the pad to one side of the pad increases the peak contact pressure of the pad on the surface to be treated on that side of the pad. This increased pressure, for example, increases the rate at which paint is removed.

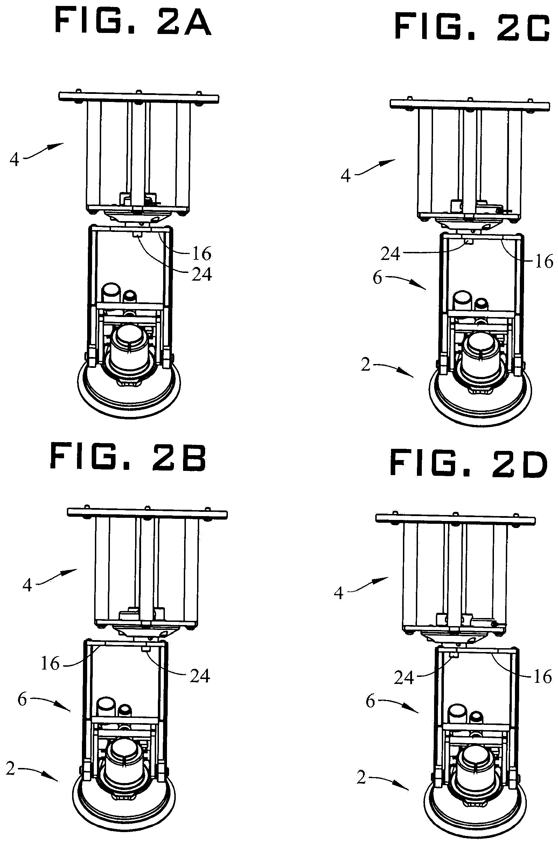

Figures 2a to 2d illustrate different locations of attachment of the back plate 16 to the extension 4. It will be appreciated that figures 2a and 2b show displacement of the force applied by the mounting arm by different amounts to the right of the end effector 2, when viewed from the front of the machine, while figures 2c and 2d show displacement to the left. Thus, the extension would bias the applied force to the right side of the abrasive pad in the arrangement of figures 2a and 2b, while it would bias the applied force to the left side in the arrangement of figures 2c and 2d.

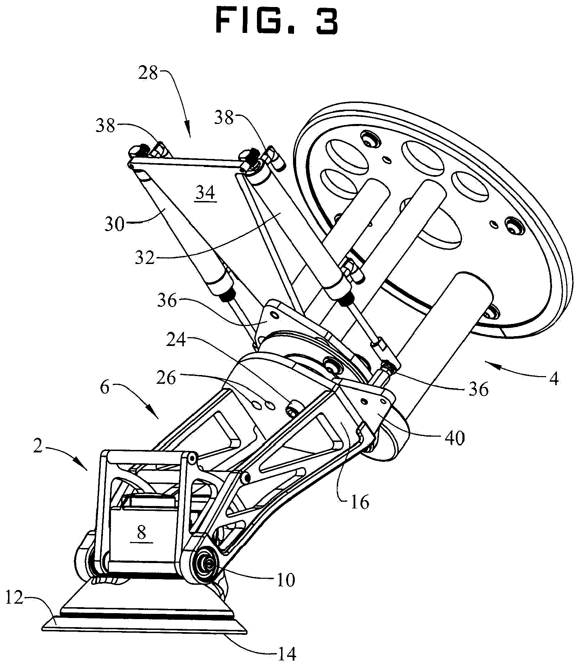

Another embodiment of the invention is shown in figure 3. In this embodiment a mechanism 28 is attached to the extension for applying a torque to the end effector, thus redistributing the force on the abrasive to result in increased force on one side of the end effector.

In this embodiment, the torque-applying mechanism 28 comprises a pair of pneumatic cylinders 30 and 32. A cylinder mounting plate 34 is attached to the extension bearing plate 36 of the extension 4. An end of each cylinder 30, 32 is attached to the cylinder mounting plate 34, and a respective opposite end of each cylinder is attached to the back plate 16 of the end effector. The cylinders can be attached directly to the back plate or to a supplemental cylinder attachment plate for varying the geometric qualities of the assembly. Cylinder 32 is shown connected to a cylinder attachment plate 40 to provide that cylinder with additional leverage. Each of the cylinders has a pneumatic inlet 38 that is connected to a regulator (not shown) to control the supply of air to the cylinders. Torque is applied to the back plate 16 by providing greater air pressure to one of the cylinders.

When both cylinders apply equal torque about the post axis, the end effector will be stationary, and the pressures in the cylinders will damp changes in the orientation of the end effector. A net torque can be applied to the end effector by applying a greater pressure to one of the cylinders. This torque is controlled to provide uniform abrasion.

It will be appreciated that the torque applied by the cylinders 30, 32 is resisted by the extension 4 with the result being that a greater force can be applied to a portion of the pad 14, depending on the geometry of the back plate 16 and the cylinder attachment plate 40.

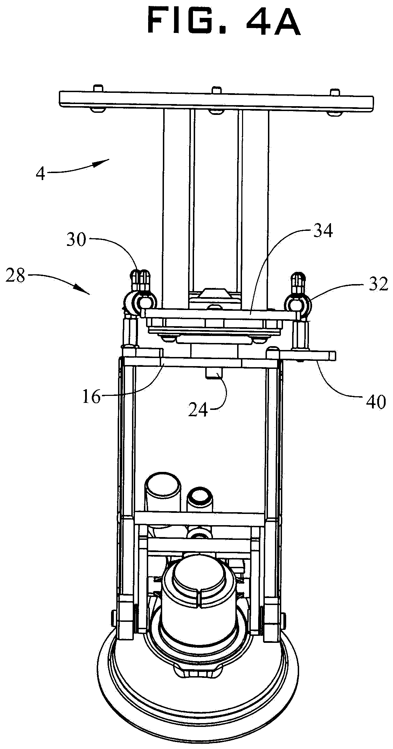

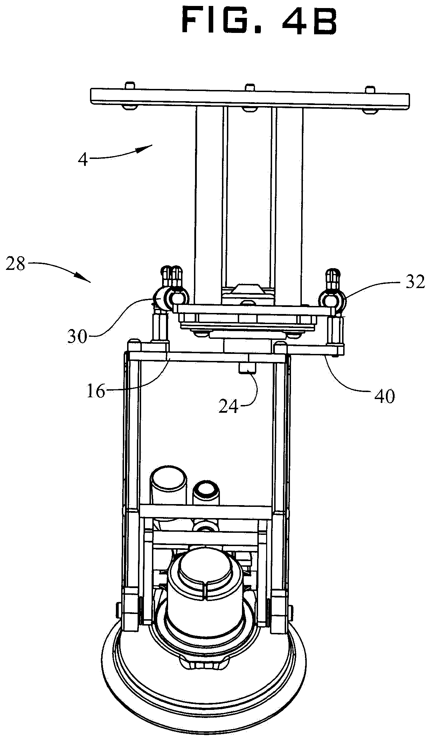

Figures 4a and 4b illustrate a combination of the first and second embodiments. Figure 4a illustrates a configuration where the post 18 (see figure 1 (b)) is attached to the back plate 16 at a location spaced from the geometric center of the plate, and figure 4(b) illustrates a configuration where the post is mounted further off-center at another of the alternate holes 26. Thus, the pressure-modifying effects of the first and second embodiments can be combined.

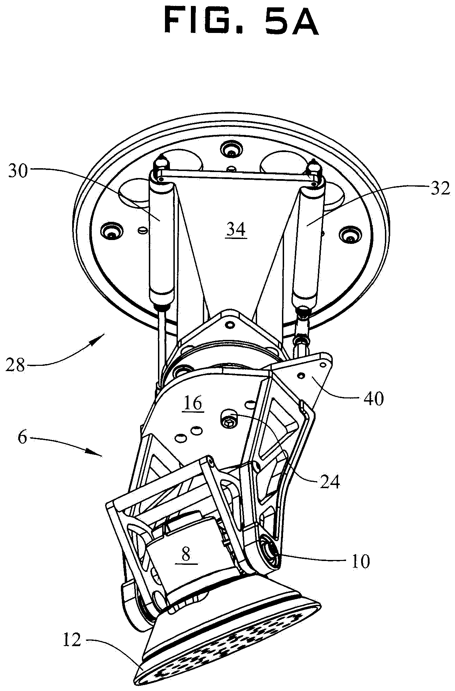

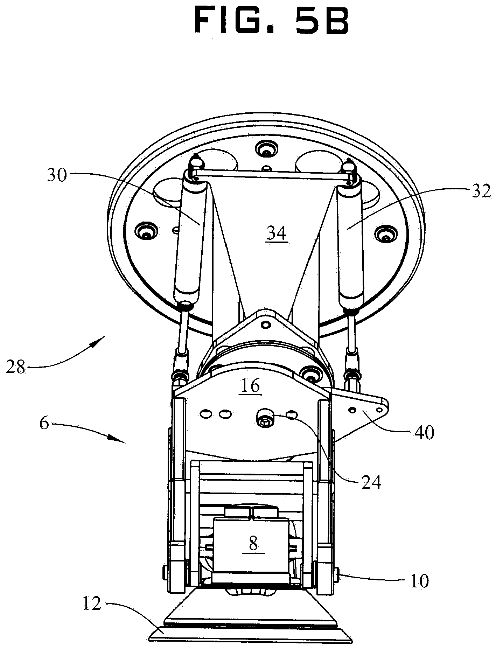

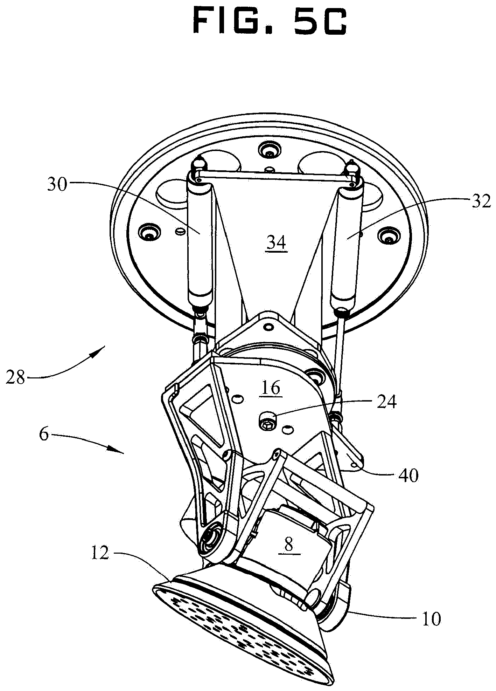

Figures 5a through 5c illustrate the effects of the torque applied to the back plate 16 by the torque applying mechanism 28. Figure 5a illustrates the result of applying greater force by cylinder 30 to the left side of the back plate 16, which causes the end effector to apply more pressure to the left side of the pad 14 (when viewed from the front). Figure 5b illustrates a neutral position of the back plate 16. Figure 5c illustrates the result of applying greater force to the right side of the back plate 16. The angles of the end effector illustrated in figures 5a and 5c also show the range of motion of the end effector in this embodiment.

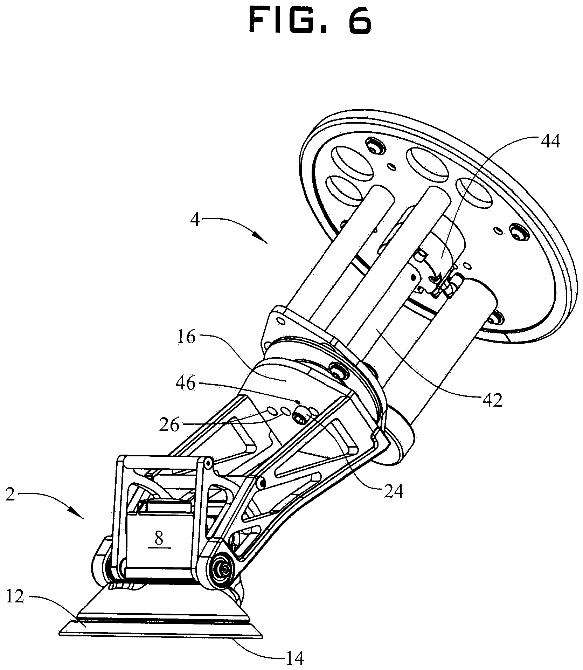

In the embodiment of figure 6, the back plate 16 is attached to a shaft 42 that is similar to post 18 of figure 1 but extends further toward the extension 4 to engage a rotary actuator 44. The rotary actuator is attached to regulators (not shown) and applies a torque to the shaft 42. The shaft 42 is attached to the back plate 16 in a manner similar to that shown in figure 1b, but prevented from rotating with respect to the back plate by a pin 46. Thus, a torque applied by the rotary actuator 44 is transmitted to the back plate 16 and, hence, to the end effector 2. The rotary actuator can comprise a cylindrical chamber that houses a rotating cylinder with a single or double vane that divides the chamber into annular portions. Pressure is applied to each portion of the rotary actuator. The difference in the pressures in the two portions causes the rotary actuator to apply a torque to shaft 42 and back plate 16. By providing pressure in both portions, the rotary actuator can dampen changes in the orientation of the end effector. Alternative holes are provided to the back plate 16 to add the features described with regard to the first embodiment also.

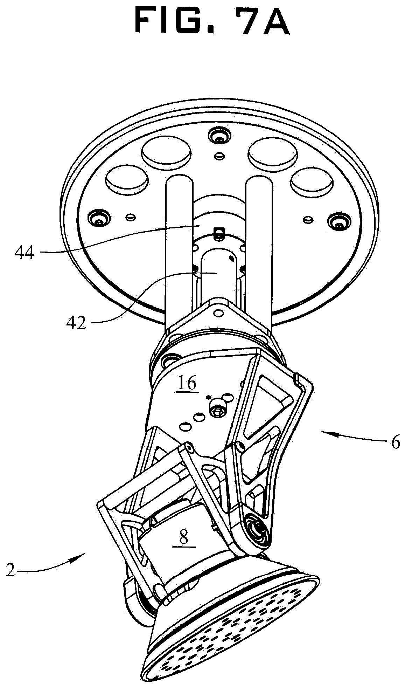

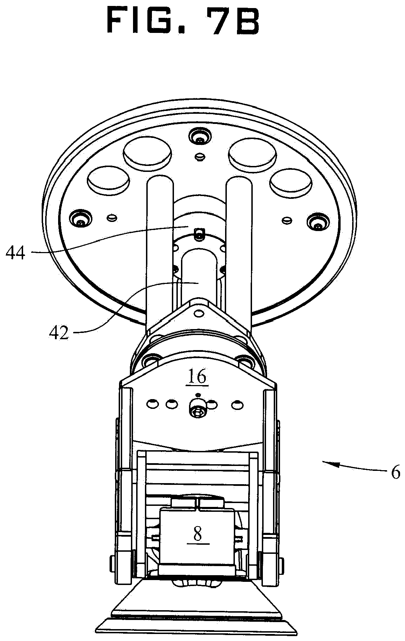

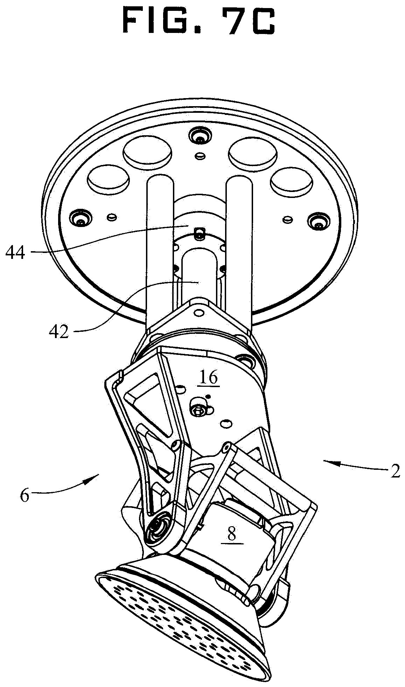

Figures 7a to 7c illustrate the configuration resulting from application of three different torques by the rotary actuator 44, as described with reference to figures 5a through 5c.

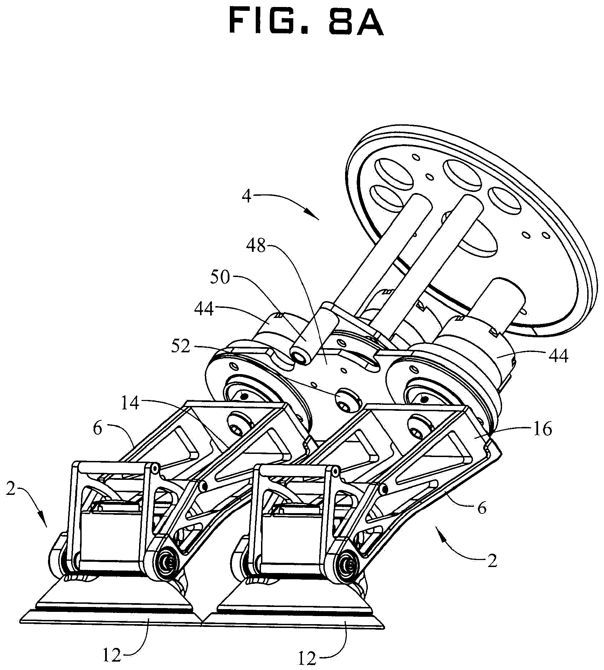

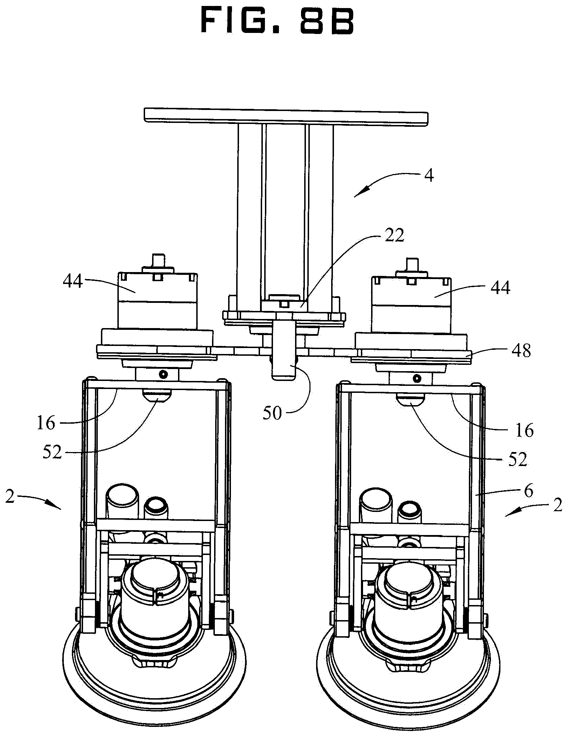

Figures 8a and 8b illustrate another embodiment where two end effectors 2 as described above are attached to an extension 4 by a dual adaptor assembly plate 48. The dual adaptor assembly plate 48 is connected to the extension 4 by a post (not shown) that is secured to the dual adaptor assembly plate by a button head cap screw 52, which is received in a threaded hole (not shown) in the post at one end and to the extension 4 by collar 22. The dual adaptor assembly can rotate with respect to the extension, and stop 50 is fixed to the extension 4 to extend toward the end effector and engage the dual adaptor plate assembly to set the limits of its angular range of motion. Each of the back plates 16 of the end effector frames 6 is attached to the dual adaptor assembly plate 48 by a respective button head cap screw 52, similar to the attachment of shaft 42 (see figure 6) in that the ends of shafts (not shown) extending from the rotary actuators 44 have threaded holes (not shown) that receive the button head cap screws to connect to the back plates 16 for rotation by the rotary actuators 44. Bearings 54 are attached to the dual adaptor assembly plate 48 for receiving the rotary actuator shafts.

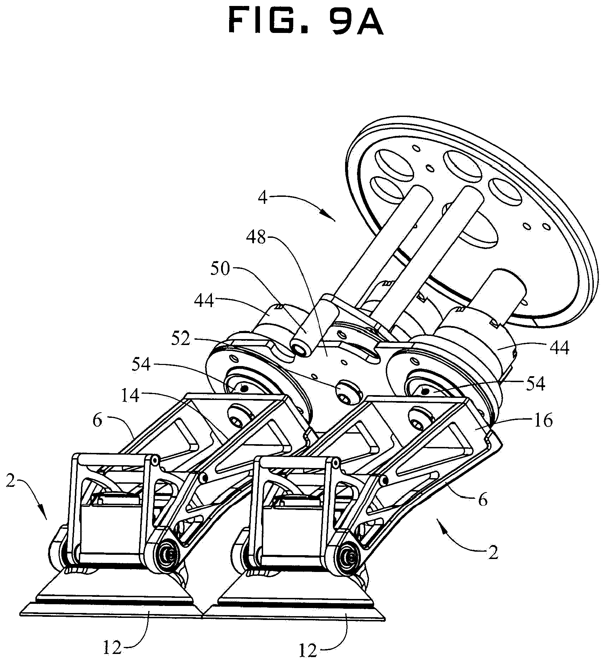

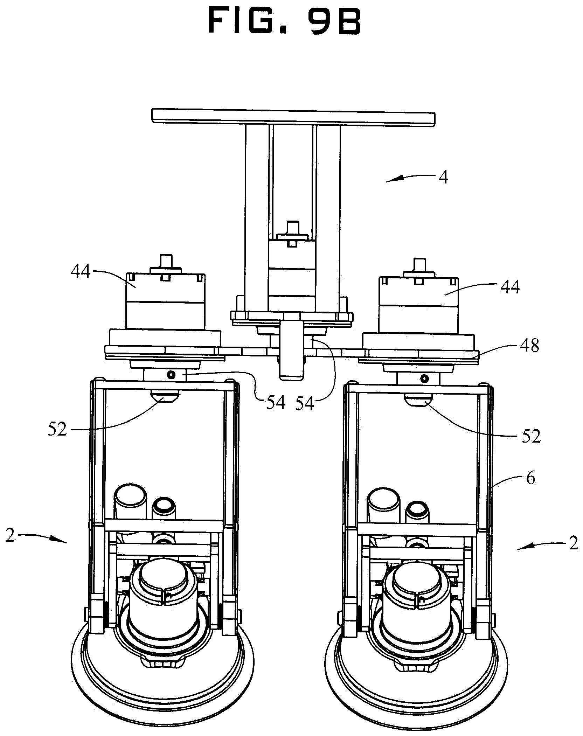

Figures 9a and 9b illustrate an embodiment that is similar to that of figures 8a and 8b, except that in this embodiment a third rotary actuator 44 is provided to apply a torque to the dual adaptor assembly plate 48 itself. Thus, a rotary actuator shaft (not shown) extends through a bearing 54 to the dual adaptor assembly plate to which it is connected to allow the rotary actuator to apply a torque to the plate 48. Application of pressure to the three rotary actuators 44 by regulators (not shown) can cause application of desired forces to the abrasive pads to achieve the desired abrasion of the surface being treated.

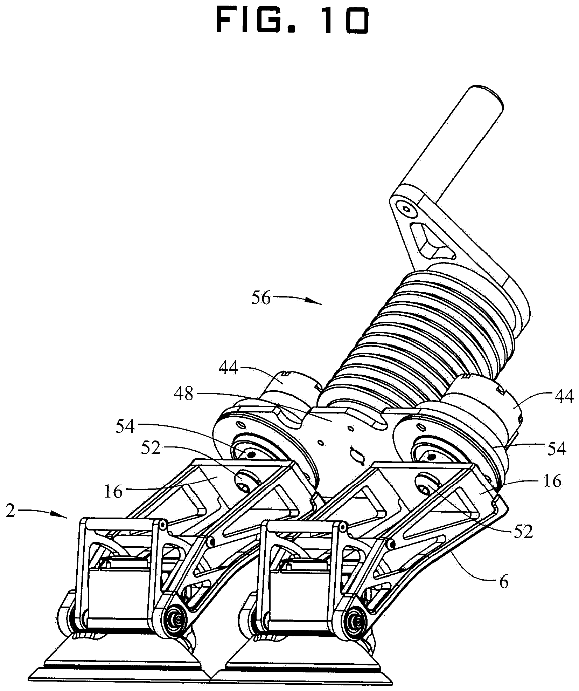

Figure 10 shows an embodiment where a dual adaptor assembly plate and two end effectors as described in connection with figures 8a and 8b are connected to a vibration-absorbing part 56, which absorbs vibrations generated by the motions of the end effectors. Preferably the vibration-absorbing part is that described in United States published application number 2006/0325392.

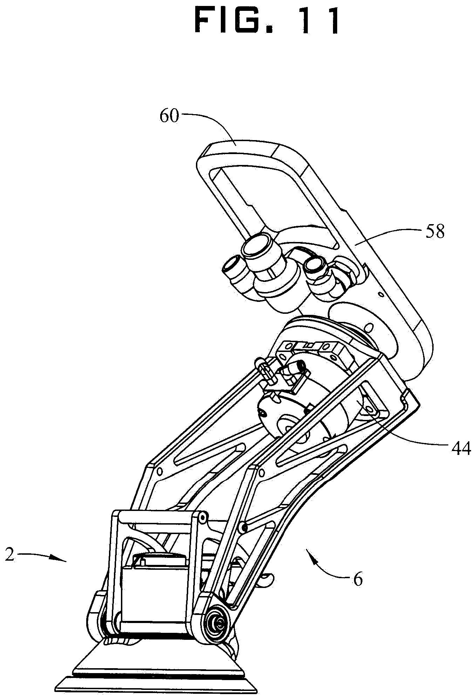

Figure 11 illustrates an embodiment where an end effector 2 includes a quick-connect 58 for attachment to an extension 4 as described herein or to any apparatus for controlling the motion of the end effector with respect to a surface to be treated. The quick-connect 58 may include a handle 60 for convenience in manipulating the end effector.

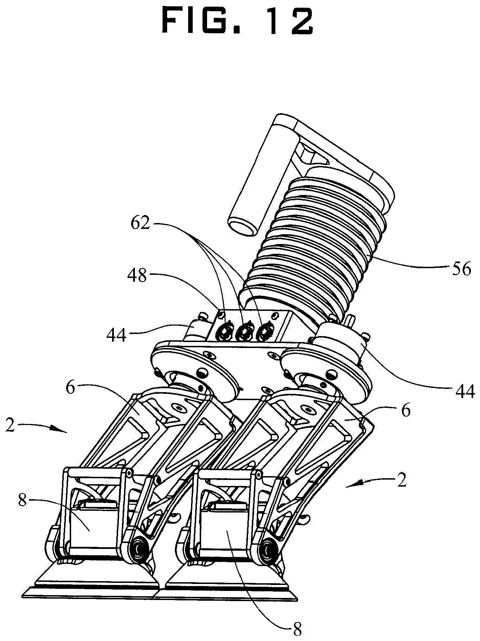

Figure 12 illustrates an embodiment utilizing three regulators 62 to control the rotary actuators 44. One of the regulators 62 can control the pressure in a first chamber of each of the rotary actuators. A second of the regulators 62 can control the pressure in a second chamber of one of the rotary actuators, and a third of the regulators can control the pressure in a second chamber of another of the rotary actuators. Each of the regulators can be provided with a knob that allows an operator to adjust the degree of non-uniformity of the contact pressure applied by each of the end effectors by adjusting the pressures in the chambers of the rotary actuators. A manifold can connect each of the regulators with a source of pressurized air, or other fluid.

It will be appreciated that the torque applied to the frame and thereby to the effector motor essentially applies a force to the effector motor in a direction at an angle to a direction perpendicular to the backup pad. If the backup pad is flat, the force applied by the frame would also be at an angle to the axis of rotation of the effector motor. In those instances where the backup pad is not flat, however, the force should be at an angle to a line perpendicular to the portion of the backup pad that is intended to contact the surface. It is within the concept of the invention that such a force can be applied by other structures, such as a robotic arm that controls the motion of the effector. A robotic arm could be controlled so as to apply a force at an angle directly to an effector that results in application of a non-uniform contact pressure between a backup pad and the surface being treated.

Modifications within the scope of the appended claims will be apparent to those of skill in the art.

## Claims

1. Apparatus for treating the surface of an article comprising a motor (8) and a backup pad (12) attached to the motor (8) and driven by the motor (8), **characterised in that** the apparatus further comprises means (26, 28, 44) for applying a non-uniform contact pressure to the backup pad (12).

2. Apparatus for treatment of a surface comprising a frame (6) for holding an effector (2) for treating said surface and a connector (16, 18; 16, 18, 32, 40; 16, 42, 44; 44, 48, 52, 54; 44, 58) configured to attach said frame (6) to an extension (4) that controls contact between said effector (2) and said surface, **characterised in that** said connector applies a force to said frame (6) that results in application of a non-uniform contact pressure between said effector (2) and said surface.

3. Apparatus according to claim 2, **characterised in that** said frame (6) comprises a first bearing (10) for mounting said effector (2) to said frame (6) for rotation about a first axis and said connector (16, 18, 32, 40; 16, 42, 44; 44, 48, 52, 54; 44, 58) applies a torque to said frame (6) about a second axis transverse to said first axis.

4. Apparatus according to claim 3, **characterised in that** said connector (16, 42) comprises a plate (16) connected to said frame (6), a second bearing, and a post (42) rotationally received in said second bearing for rotation about said second axis, wherein said post (42) applies said torque to said frame (6).

5. Apparatus according to claim 4, further comprising said effector (2), **characterised in that** said effector (2) comprises a motor (8) and a backup pad (12), the motor (8) rotating said backup pad (12) about a motor axis, and **in that** said torque is generated by a force applied to said post (42) by said extension (4), said force being displaced from said motor axis in the direction of said first axis.

6. Apparatus according to claim 3, **characterised in that** said connector (16, 18, 32, 40) comprises at least one device (32) connected to said frame (6) for applying a linear force between said extension (4) and said frame (6), said linear force generating said torque.

7. Apparatus according to claim 6, **characterised in that** said device (32) comprises one or more pneumatic cylinders (32).

8. Apparatus according to claim 4, **characterised in that** said connector (16, 42) further comprises at least one device (32) connected to said frame (6) for applying a linear force between said extension (4) and said frame (6), said linear force generating said torque.

9. Apparatus according to claim 3, **characterised in that** said connector (16, 42, 44; 44, 48, 52, 54; 44, 58) comprises a rotary actuator (44).

10. Apparatus according to claim 4, **characterised in that** said connector (16, 42, 44; 44, 48, 52, 54; 44, 58) further comprises a rotary actuator (44).

11. Apparatus according to claim 2, comprising said extension (4), an adapter plate (16) connected to said extension (4) and having said frame (6) attached thereto, and a second frame (6) for holding a second effector (2) for treating said surface and a second connector (44, 48, 52, 54) attaching said second frame (6) to said adapter plate (16), **characterised in that** said second connector (44, 48, 52, 54) applies a force to said second frame (6) that results in application of a non-uniform contact pressure between said second effector (2) and said surface.

12. A method of treating a surface comprising moving an extension (4) having mounted thereon an apparatus for treatment of said surface said apparatus comprising a frame (6) holding an effector (2) for treating said surface and a connector (16, 18; 16, 18, 32, 40; 16, 42, 44; 44, 48, 52, 54; 44, 58) attaching said frame (6) to said extension (4), operating said extension (4) to provide contact between said effector (2) and said surface, **characterised in that** said connector applies a force to said frame (6) that results in application of a non-uniform contact pressure between said effector (2) and said surface.
